# EUROPÄISCHE PATENTSCHRIFT

(11) **EP 1 087 655 B1**
(45) Veröffentlichungstag und Bekanntmachung des Hinweises auf die Patenterteilung: **04.09.2002**
(21) Anmeldenummer: 99917034.3
(22) Anmeldetag: 17.05.1999
(51) Int. Cl.: A01G 25/02, A01G 25/09

(54) **VERFAHREN ZUR SCHRITTWEISEN BEWÄSSERUNG VON GRUNDSTÜCKEN UND BEWÄSSERUNGSEINRICHTUNG ZUR DURCHFÜHRUNG DES VERFAHRENS**
GRADUATED LAND WATERING METHOD AND WATERING DEVICE FOR IMPLEMENTING SAID METHOD
PROCEDE D'ARROSAGE PROGRESSIF DE TERRAINS ET DISPOSITIF D'ARROSAGE CORRESPONDANT

(30) Priorität: 15.06.1998 CZ 185898
(43) Veröffentlichungstag der Anmeldung: 04.04.2001
(73) Patentinhaber: Popelka, Ludvik, 779 00 Olomouc (CZ); Popelka, David, 779 00 Olomouc (CZ)
(72) Erfinder: Popelka, Ludvik, 779 00 Olomouc (CZ); Popelka, David, 779 00 Olomouc (CZ)
(74) Vertreter: Jeck, Anton, Dipl.-Ing.
(86) Internationale Anmeldenummer: IB9900882
(87) Internationale Veröffentlichungsnummer: WO99065290

(56) Entgegenhaltungen:
- US-A- 2 395 253
- US-A- 3 195 563
- US-A- 4 562 963

## Beschreibung

### Erfindungsgebiet

Die Erfindung betrifft ein Verfahren zur schrittweisen Bewässerung von Grundstücken und eine Bewässerungseinrichtung zur Durchführung des Verfahrens, insbesondere zur Durchführung der Bewässerung von begrasten Großflächen-Grundstücken bzw. von Grundstücken mit Landwirtschafts- und Kulturpflanzen.

### Stand der Technik

Außer den Bewässerungsarten für Grundstücke mittels Bodenbefeuchtung, der unterirdischen Wasserverteilung und der oberirdischen Wasserverteilung ist eine ganze Reihe von Maschinen und Einrichtungen für die Großflächenbewässerung bekannt.

Aus der US-A-3 195 563 ist eine Gartensprinkleranlage bekannt, die aus einem geschlossenen, festen Rahmen aus Rohren besteht, wobei zwei gegenüberliegende Längsrohre Sprühöffnungen zum Aussprühen des dem Rahmen unter Druck zugeführten Wassers aufweisen. Dieser Rahmen mit seinem Wasseranschluss ist zwar transportabel, aber bei entsprechender Größe nur schwer zu verlegen und an die Geländeform nicht anpassungsfähig.

Die verbreitetsten Einrichtungen sind Trommel-Bewässerungsmaschinen, die sogenannten Schlauchberegnungsanlagen, die je nach Art der Aufspulung und des Vorschubs des Endglieds mit dem Regner längs der zu bewässernden Fläche in Bewässerungsanlagen mit aufgespultem Schlauch und in Bewässerungsanlagen mit geschlepptem Schlauch eingeteilt werden. Ein gemeinsamer Nachteil beider Arten der Schlauchbewässerungsanlagen besteht darin, daß der auf der Trommel aufgewickelte Schlauch, dessen Länge im Durchschnitt etwa 300 m beträgt, abgewickelt werden muß, was in der Regel mit einem Traktor geschieht. Das führt zu einer beträchtlichen Bodenverdichtung. Zu den weiteren Nachteilen gehören die hohen Anschaffungskosten und der verhältnismäßig große Energieaufwand, da die gesamte Betriebswassermenge durch den ganzen Schlauch laufen muß und außerdem ein Teil der Energie für das Aufwickeln oder Schleppen des Schlauchs benötigt wird.

Für die Großflächenbewässerung werden Linear-Beregnungsmaschinen mit großer Arbeitsbreite oder Mittelpunktsdreh-Beregnungsmaschinen verwendet, die mittels eines mit Regnern versehenen Rohrs mit einer Duchschnittslänge von 500m gebildet sind, das auf einer mit einem Fahrgestell versehenen Fachkonstruktion getragen wird. Bei den Mittelpunktsdreh-Beregnungsmaschinen wird Wasser dem Drehzapfen zugeführt, um den sich die gesamte Einrichtung dreht, während die Linear-Beregnungsmaschine über eine Pumpe aus einem geschleppten Schlauch oder einem längsverlaufenden Bewässerungskanal gespeist wird. Nachteile dieser Einrichtungen bilden die hohen Anschaffungskosten und die beschränkte Verwendbarkeit, nämlich nur auf Grundflächen, die keine größeren Unebenheiten und keine anderen Hindernisse, wie beispielsweise Bäume oder Masten für elektrische Leitungen, aufweisen dürfen.

Ein gemeinsamer Nachteil aller obengenannten Einrichtungen besteht darin, daß das Wasser stets durch Düsen und Regner in verhältnismäßig großer Höhe und Entfernung über den Pflanzen gesprüht wird. Dies hat eine große Wasserverdampfung zur Folge, ohne daß das verdampfende Wasser der Pflanzenbewässerung dienen kann. Ein weiterer Nachteil besteht darin, daß die Wirkung und die Gleichmäßigkeit der Beregnung weitgehend von der Windstärke abhängen und daß in manchen Fällen eine unerwünschte Benetzung der oberirdischen Pflanzenteile stattfindet. Dadurch wird wiederum ein günstiges Klima für die Entstehung von Pilz- und Schimmelerkrankungen gebildet.

### Zusammenfassung der Erfindung

Die genannten Nachteile werden bei einem Verfahren gemäß dem Oberbegriff des Anspruchs 1 dadurch im Wesentlichen vermieden, daß der Bewässerungsschlauch nach seinem Abwickeln und der Wahl der Bewässerungsperiode des Grundstreifens des Grundstücks mittels einer axialen Vorwärtsbewegung einer in radialer Richtung gebildeten Schleife ähnlich einer Welle um einen Schritt gekippt wird und nach der Erreichung des Umkehrpunktes und der darauffolgenden Bewässerungsperiode sowie dem seitlichen Kippen um 180° in einer Rückwärtsbewegung ähnlich einer Welle um einen weiteren radialen Schritt gekippt wird, bis hin zum Erreichen des Ausgangsendes des zu bewässernden Grundstücks und der Umstellung auf den nächsten Bewässerungszyklus.

Die genannten Nachteile werden auch bei einer Bewässerungseinrichtung gemäß dem Oberbegriff des Anspruchs 2 dadurch im Wesentlichen vermieden, daß am Bewässerungsschlauch seitlich eine Schleife gebildet ist, in der auf dem Bewässerungsschlauch ein Führungsglied aufsitzt, das mittels eines Arms mit einem Fahrgestell verbunden ist.

Gemäß einer vorteilhaften, weiteren Ausbildung der Erfindung ist das Fahrgestell mit mindestens zwei Laufrädern versehen, von denen eines das Treibrad darstellt und mit einem Antrieb verbunden ist.

Gemäß einer vorteilhaften, weiteren Ausbildung der Erfindung ist eines der Laufräder seitlich als Stütze des Arms gelagert und auf dem Fahrgestell schwenkbar drehgelagert.

Gemäß einer vorteilhaften, weiteren Ausbildung der Erfindung ist der Antrieb mit einem Handhabungs- und Steuerblock versehen.

Gemäß einer vorteilhaften, weiteren Ausbildung der Erfindung sind die Laufräder des Fahrgestells nacheinander angeordnet, auf ihrem Umfang mit einer Führungsnut versehen und auf dem Bewässerungsschlauch geführt.

Gemäß einer vorteilhaften, weiteren Ausbildung der Erfindung ist das Fahrgestell mit herunterklappbaren, vom Handhabungs- und Steuerblock gesteuerten Stabilisierungsbeinen versehen.

Gemäß einer vorteilhaften, weiteren Ausbildung der Erfindung ist das Führungsglied am mittleren Teil des Arms befestigt und am freien Ende des Arms ein Verlegeglied befestigt, das auf dem Bewässerungsschlauch gelagert und mit einem Aufnahmehaken versehen ist.

Gemäß einer vorteilhaften, weiteren Ausbildung der Erfindung ist das Verlegeglied als Fahrgestell mit nacheinander angeordneten Laufrädern mit einer Umfangsnut ausgebildet und in Bezug zu dem auf dem Bewässerungsschlauch laufenden Fahrgestell auf dem Bewässerungsschlauch spiegelbildlich geführt.

Gemäß einer vorteilhaften, weiteren Ausbildung der Erfindung ist der Bewässerungsschlauch an seinem dem Anschluß an die Bewässerungsquelle entgegenliegendem Ende oder an beiden Enden mit einem Aufnahmeglied versehen.

Gemäß einer vorteilhaften, weiteren Ausbildung der Erfindung ist der Bewässerungsschlauch an seinem an die Bewässerungsquelle angeschlossenen Ende an einer Ziehvorrichtung befestigt.

Gemäß einer vorteilhaften, weiteren Ausbildung der Erfindung weist die Bewässerungseinrichtung zwei oder mehr miteinander verbundene oder mehrbändige Bewässerungsschläuche auf.

Gemäß einer vorteilhaften, weiteren Ausbildung der Erfindung weist einer der Bewässerungsschläuche keine Öffnungen auf.

Die neue Konstruktionslösung der Bewässerungseinrichtung setzt die Anschaffungskosten wesentlich herab, vereinfacht die Handhabung und die Bedienung der Einrichtung und sichert eine weitgehend gleichmäßige Verteilung der Bewässerungsmenge. Dabei wird der Windeinfluß auf die Bewässerungsgleichmäßigkeit eliminiert. Die oberen Blätterteile von höheren Pflanzen werden während der Bewässerung nicht benetzt. Die Menge des verdampfenden Wassers wird wesentlich verringert, und die Energieausbeute bei der Beregnung steigt infolge der Verwendung eines geringeren Wasserbetriebsdrucks an.

### Kurzfassung der Figuren

In den beigefügten Zeichnungen sind konkrete Ausführungsbeispiele der Erfindung schematisch dargestellt. Es zeigen:
- Fig. 1: die grundlegenden Betriebsphasen der Bewässerungseinrichtung, wobei im unteren Figurenteil ein Bewässerungsschlauch in der Grundstellung ohne Fahrgestell, im mittleren Figurenteil ein Bewässerungsschlauch mit einem sich in einer Richtung bewegenden Fahrgestell und im oberen Figurenteil die Stellung des Fahrgestells auf einem Bewässerungsschlauch in der Kehre nach dem Kippen der Schleife für die Vorwärtsbewegung in der entgegengesetzten Richtung dargestellt ist,
- Fig. 2: eine Teilansicht der Grundausführung des Fahrgestells,
- Fig. 3: eine Teilansicht eines alternativen Fahrgestells für die Bewässerung mit zwei parallellaufenden Bewässerungsschläuchen,
- Fig. 4: eine Teilansicht eines weiteren alternativen Fahrgestells für das Kippen des Schlauchs ohne Bedienungsperson,

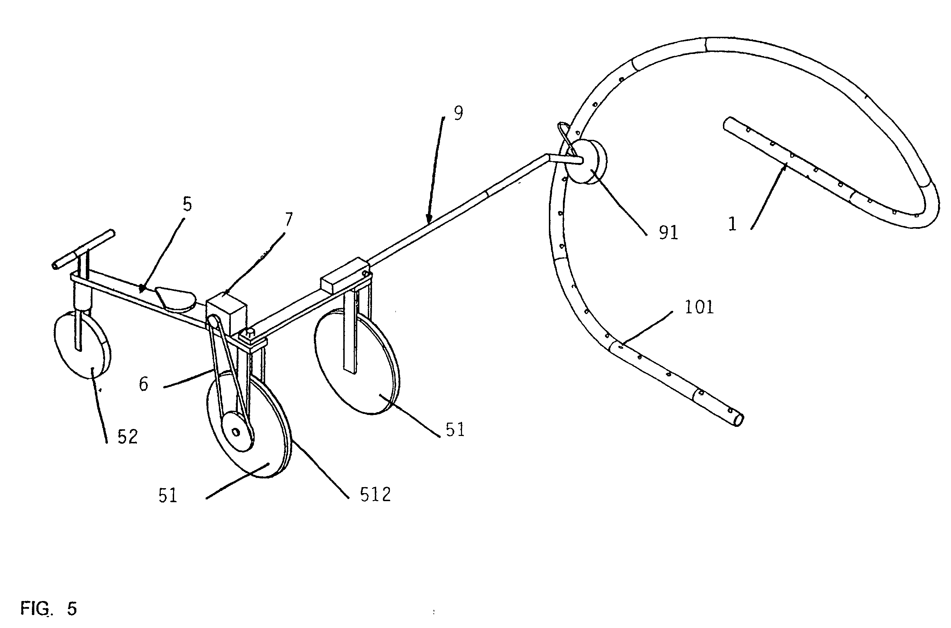

- Fig. 5: eine Teilansicht eines weiteren alternativen Fahrgestells mit einem schwenkbaren und seitlich in der Länge verstellbaren Arm, der von einem der Laufräder des Fahrgestells gestützt wird, die mit Reifen versehen sind, und
- Fig. 6: eine Abart des Fahrgestells der Fig. 5, das für die Vorwärtsbewegung eines der Laufräder längs des Bewässerungsschlauchs umgerüstet wurde.

### Beschreibung der Ausführungsbeispiele

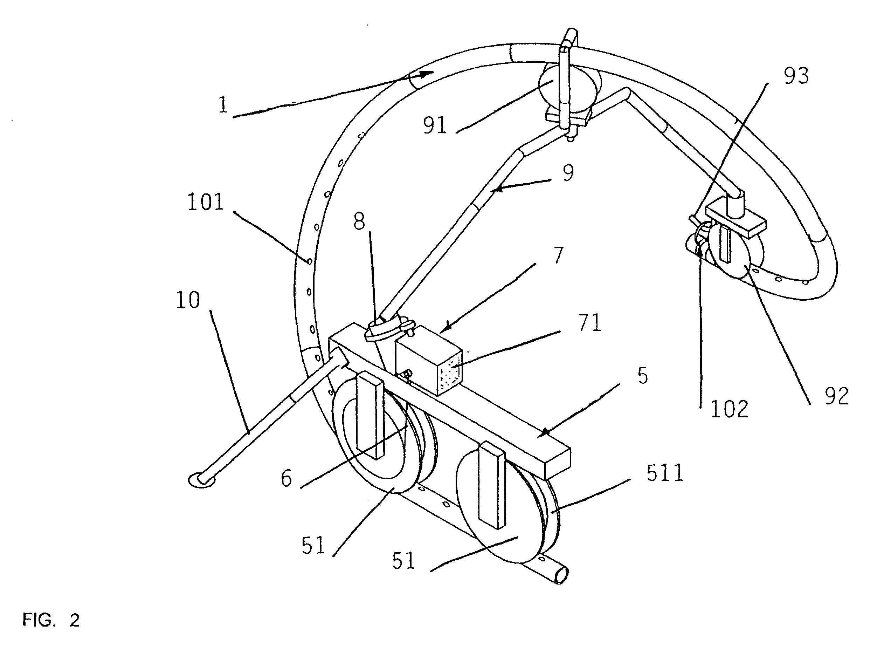

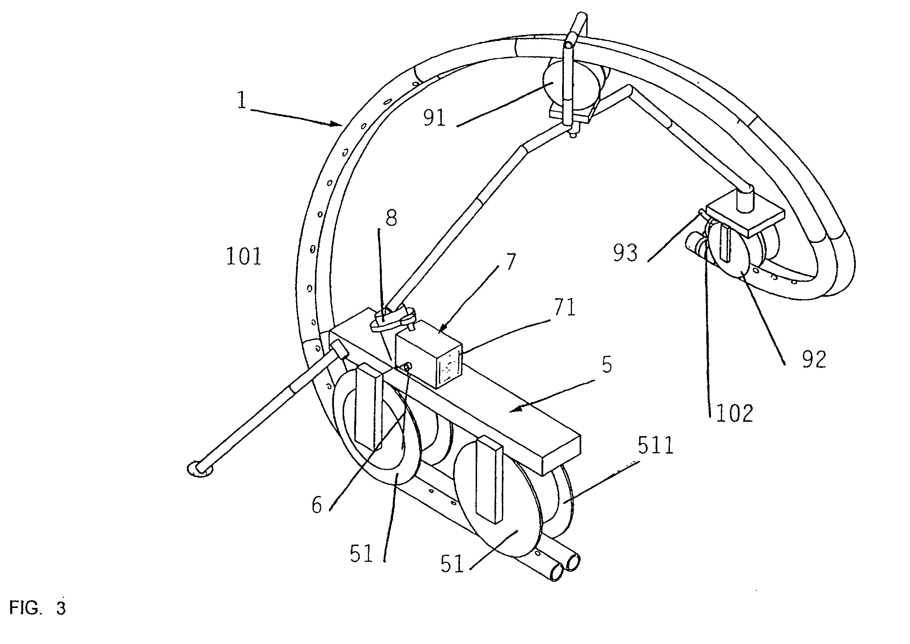

Die Bewässerungseinrichtung besteht aus einem flexiblen Bewässerungsschlauch 1, der vorzugsweise aus Polyolefin hergestellt ist. Der Schlauch 1 ist entlang seiner gesamten Länge mit Öffnungen 101 für den Austritt bzw. das Herausspritzen von Wasser versehen und mittels einer Schnellkupplung 2 und eines Anschlußschlauchs 3, der mit einer nicht dargestellten Verschlußarmatur versehen ist, an eine Bewässerungsquelle 4, beispielsweise eine Pumpe, angeschlossen. Am entgegengesetzten Ende ist der Schlauch 1 verschlossen und mit einem Aufnahmeglied, beispielsweise einer Öse, versehen. Am Schnellkupplungsende ist der Bewässerungsschlauch 1 an einer Ziehvorrichtung 103, beispielsweise einer Wickelwinde mit Hydroantrieb, befestigt, die das Verschieben des Bewässerungsschlauchs 1 während des Bewässerungsprozesses ermöglicht und somit eine größere Bewässerungsgleichmäßigkeit und eine Verringerung der lokalen Bewässerungsstärke sichert. Auf dem Bewässerungsschlauch 1 ist ein Fahrgestell 5 mit zwei hintereinander angeordneten Laufrädern 51 angeordnet, die an ihrem Umfang eine Führungsnut aufweisen. Eines der Laufräder 51 ist das treibende und beispielsweise über einen Keilriemen mit einem Antrieb 7 verbunden. Dieser Antrieb besteht beispielsweise aus einem von einer Akkumulatorenbatterie gespeisten und auf dem Fahrgestell 5 befestigten Elektroantrieb. Der Antrieb 7 ist mit einem Handhabungs- und Steuerblock 71 versehen, der zur Steuerung der Bewegungsrichtung des Fahrgestells 5, dessen Anhalten am Umkehrpunkt, zum Kippen des Bewässerungsschlauchs 1 zu einer Schleife, zur Regelung der Bewässerungszeiten und zum Stillsetzen des Fahrgestells 5 dient. Der Handhabungs- und Steuerblock 71 ist außerdem mit einer schräggelagerten Nabe verbunden, die vorzugsweise unter einem Winkel von 45° angeordnet ist. In dieser Nabe ist ein Arm 9 auf einem nicht dargestellten Zapfen befestigt. Der Arm 9 ist vorzugsweise ein Gelenkarm mit verstellbarer Länge und Höhe und an seinem mittleren Teil mit einem Führungsgiied, beispielsweise einer Führungsrolle oder -gabel, und am Ende mit einem Auflageglied 92, beispielsweise einer laufrichtungsabhängigen Rolle, und einem Aufnahmehaken 93 (Figuren 2, 3) versehen. Außerdem ist das Fahrgestell 5 mit herunterklappbaren Stabilisierungsbeinen 10 versehen, die vom Handhabungs- und Steuerblock 71 gesteuert werden.

Vor Beginn der Bewässerung wickelt die Bedienungsperson den Bewässerungsschlauch 1 ab und schließt diesen an die Bewässerungsquelle 4 an. Anschließend wird der erste Streifen des Grundstücks bewässert. Nach Ablauf der gewählten Zeitdauer wird der Zulauf des Bewässerungswassers gestoppt. Die Bedienungsperson entkuppelt den Bewässerungsschlauch 1 vom Anschlußschlauch 3 und bildet am Bewässerungsschlauch 1 eine Schleife, in die das Führungsglied 91 des Arms 9 eingesetzt wird sowie das Fahrgestell 5 und ein Verlegeglied 92 angebracht werden. Die Bedienungsperson kuppelt anschließend die Schläuche 1 und 3 miteinander, öffnet die Zuleitung des Bewässerungswassers wieder und schaltet den Antrieb 7 des Fahrgestells 5 ein.

Dieses Fahrgestell fährt auf dem Bewässerungsschlauch 1 bis an das entgegengesetzte Schlauchende, wobei die gebildet Schleife wie eine Welle fortläuft. Am Ende des Bewässerungsschlauchs 1 fährt das Verlegeglied 92 mit seinem Aufnahmehaken 93 in das feste Aufnahmeglied 102 hinein. Hier stoppt die Vorwärtsbewegung des Fahrgestells 5, und der Bewässerungsschlauch 1 kommt in die Bewässerungsstellung für den nächsten Grundstücksstreifen.

Gemäß der vorgegebenen Bewässerungsdauer wird auf einen Steuerimpuls des Handhabungs- und Steuerungsblocks 71 hin der Prozeß der seitlichen Verstellung des Bewässerungsschlauchs 1 um einen weiteren Schritt eingeleitet.

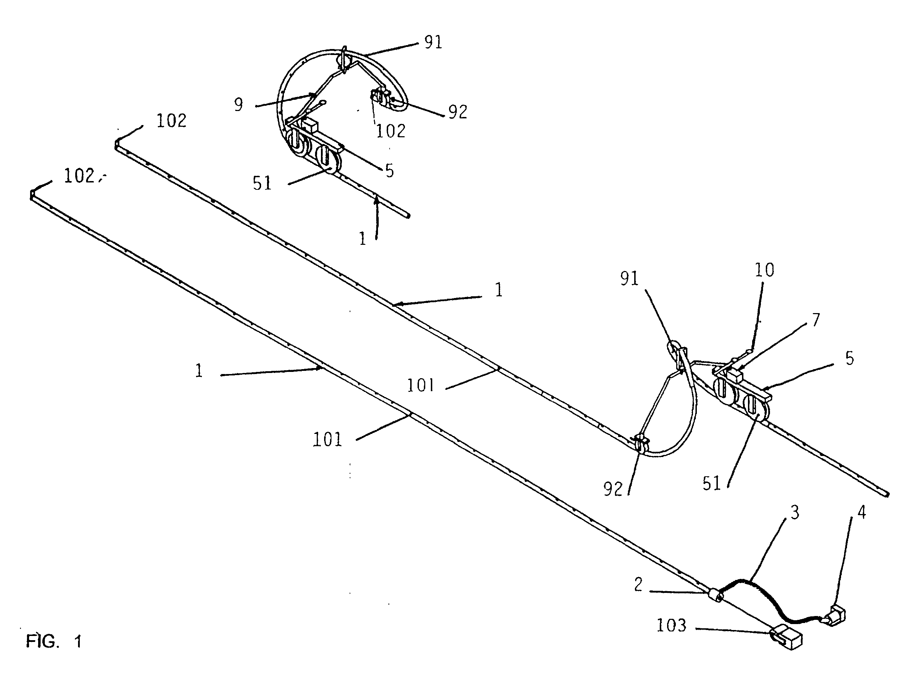

Dabei werden erst die Stabilisierungsbeine 10 heruntergeklappt, die sich auf den Boden abstützen, und dann wird der Arm 9 mittels der Drehbewegung der Nabe 8 um 180° so gekippt, daß das Verlegeglied 92 mit dem eingehakten Ende des Bewässerungsschlauchs 1 erst eine ansteigende und anschließend eine sinkende, bogenartige Bewegung vollbringt, in den Folge das Ende des Bewässerungsschlauchs 1 seitlich um eine Entfernung versetzt wird, die der zweifachen Reichweite des Arms 9 entspricht, wobei das Fahrgestell 5 in die Spiegelbildstellung zu der auf dem oberen Teil der Fig. 1 dargestellten Lage kommt. Nach dem Hochklappen der Stabilisierungsbeine 10 wird ein Steuerimpuls zur Bewegung des Fahrgestells in der entgegengesetzten Richtung zum Anfang des Bewässerungsschlauchs 1 gegeben. Nachdem das Fahrgestell 5 den Umkehrpunkt erreicht hat und stehengeblieben ist, wird die Bewässerung des nächsten Grundstücksstreifens eingeleitet. Die Bedienungsperson entkoppelt nach Ablauf der vorgewählten Bewässerungszeitdauer und dem Absperren der Wasserzuleitung die Schläuche 1 und 3 und verstellt von Hand aus das Fahrgestell 5 und die Schleife des Bewässerungsschlauchs 1. Danach kann der nächste Bewässerungszyklus aus der nächsten, um einen Schritt in seitlicher Richtung verschobenen Stellung ausgeführt werden.

Die beschriebene Konstruktion ist nicht die einzig mögliche Ausführung gemäß der Erfindung. In Fig. 3 ist eine Bewässerungseinrichtung gezeigt, die aus zwei (oder mehreren) miteinander verbundenen oder mehrbändigen, gleichlaufenden Bewässerungsschläuchen 1 gebildet ist. Diese Schläuche sichern eine größere Führungsstabilität des aus den Öffnungen 101 austretenden oder herausspritzenden Wassers. Die Laufräder 51 können dabei mit einer doppeltbreiten Führungsnut 511 versehen sein. Einer der Bewässerungsschläuche braucht dabei nicht mit Öffnungen 101 versehen zu sein und kann lediglich die Anfüllfunktion beim Anschluß des eigentlichen Bewässerungsschlauchs 1 mit den Öffnungen 101 beim Anschluß an das entgegengesetzte Ende erfüllen. Ferner ist es nicht von entscheidender Bedeutung, ob die einzelnen Bänder des Bewässerungsschlauchs 1 in einer gemeinsamen Ummantelung untergebracht sind oder getrennt verlaufen und nur miteinander gekoppelt sind.

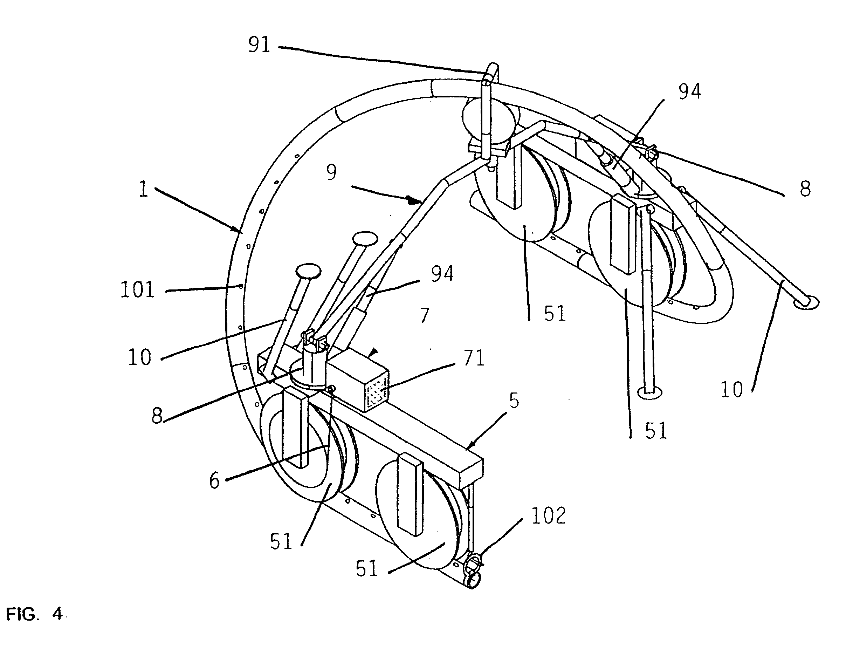

Bei einer alternativen Ausführung der Bewässerungseinrichtung nach Fig. 4 ist am Ende des Arms 9 anstelle des Verlegeglieds 92 spiegelbildlich noch ein weiteres Fahrgestell 5 mit einem gesonderten Antrieb 7 und einem Handhabungs- und Steuerblock 71 für die Zeitsteuerung und Sicherung des Laufs angebracht. Dabei findet in beiden Umkehrpunkten ein automatisches Kippen der Schleife statt. Beide Handhabungs- und Steuerblöcke 71 müssen zwecks Synchronisation der Bewegungen beider Fahrgestelle miteinander gekoppelt sein, und die Bedienungsperson muß lediglich den Anschlußschlauch 3 an- und abkuppeln. Das eigentliche Kippen der Schleife durch die Fahrgestelle 5 wird dann mittels Ausschieben und Einziehen von teleskopischen Stützen 94 des Arms 9 vorgenommen, deren Funktion auf das Verdrehen des Zapfens der Nabe 8 eingestellt ist.

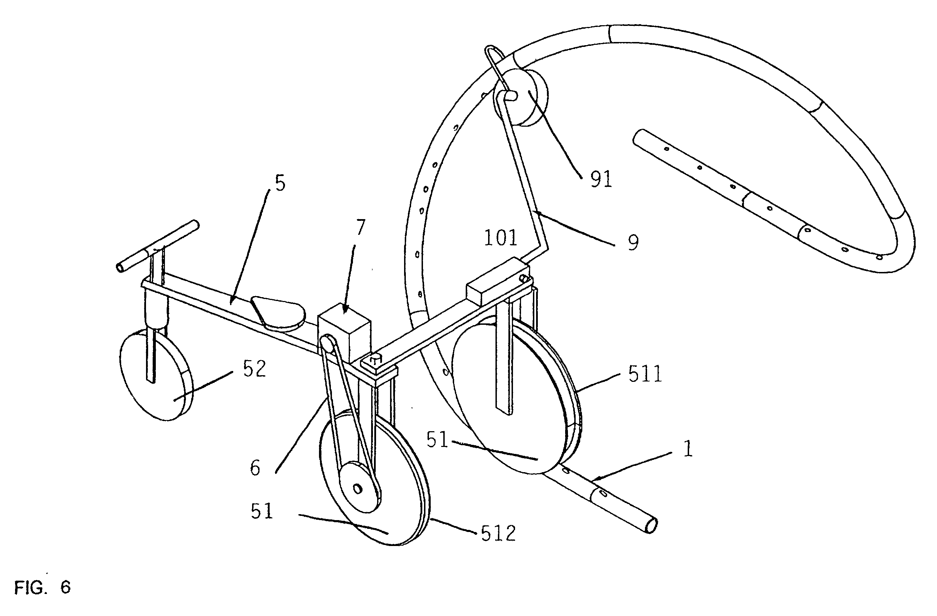

Eine schrittweise Bewässerung kann außerdem mit Hilfe eines Fahrgestells 5 mit eigenem Antrieb 7 oder mit mechanischem Antrieb erreicht werden, bei dem eines der Laufräder 51 seitlich gelagert ist und als Stütze des Arms 9 dient, dessen Lage hinsichtlich der Fahrgestellbewegung um 180° verstellt werden kann. Die Fortbewegungsrichtung des Fahrgestells wird dann nicht mit Hilfe des Verlegeglieds 92, sondern mit Hilfe eines Steuerungsrads 52 ermöglicht. Der Arm 9 ist in diesem Fall mit einem an seinem Ende angebrachten Führungsglied 91 versehen. Die Laufräder 51 des Fahrgestells bewegen sich in diesem Fall außerhalb des zu bewässernden Bodenstreifens und sind an ihrem Umfang nicht mit einer Führungsnut 511, sondern mit Reifen 512 versehen. Wie Fig. 6 zeigt, kann das den Arm 9 stützende Laufrad 51 des Fahrgestells 5 entlang dem Bewässerungsschlauch 1 bewegt werden, wodurch ein präziseres Verlegen des Bewässerungsschlauchs 1 gesichert ist.

Für die grundlegende Konstruktionskonzeption der Bewässerungseinrichtung sind ferner die Form und die Materialausführung des Bewässerungsschlauchs 1 genauso wie dessen Größe, Form, die Größe und Gleichmäßigkeit der Öffnungen 101, die in Übereinstimmung mit den geforderten, allgemeinen Bewässerungskriterien bestimmt werden, nicht von entscheidender Bedeutung und brauchen bei der Erfindung nicht spezifiziert werden. Der Bewässerungsschlauch braucht auch nicht aus einem ganzen Stück zu bestehen, sondern kann aus einzelnen Segmenten zusammengestellt sein, die mittels Schnellkupplungen miteinander gekoppelt werden, ohne daß dies die Funktionstüchtigkeit der Einrichtung oder die Qualität der Bewässerung beeinflußt.

## Patentansprüche

1. Verfahren zur schrittweisen Bewässerung von Grundstücken mittels eines entlang seiner gesamten Länge mit Öffnungen versehenen Bewässerungsschlauchs,
**dadurch gekennzeichnet, dass**
- auf der Bewässerungsausgangsseite mit dem Schlauch eine halbkreisförmige, aufrechte Schleife gebildet wird, deren Anfang und Ende sich am Grundstücksboden befinden,
- durch Einwirkung auf den am Grundstücksboden liegenden Schlauch in dessen Längsrichtung eine Vorwärtsbewegung der Schleife in Schlauchlängsrichtung und damit eine Umverlegung des Schlauchs bewirkt wird, bis das andere Schlauchende und damit eine Endstellung der Schleife erreicht ist,
- nach der dann erfolgenden Bewässerungsperiode dieses andere Schlauchende aus der Schleifenendstellung gegenüber dem umverlegten Schlauch um einen Schwenkwinkel von 180° auf den Grundstücksboden umverlegt wird,
- dann durch Einwirkung auf den am Grundstücksboden liegenden Schlauch in dessen Rückwärtslängsrichtung eine Rückwärtsbewegung der Schleife in Schlauchlängsrichtung und damit eine Umverlegung des Schlauchs um einen weiteren Abstand bewirkt wird, bis das ausgangsseitige Schlauchende erreicht ist, und
- nach einer weiteren Bewässerungsperiode in dieser Weise fortgefahren wird, bis die Bewässerung des Grundstücks abgeschlossen ist.

2. Bewässerungseinrichtung zur schrittweisen Bewässerung, wobei die Bewässerungseinrichtung aus mindestens einem flexiblen Bewässerungsschlauch besteht, der entlang seiner gesamten Länge mit Öffnungen für das Austreten oder Herausspritzen von Wasser versehen ist und an eine Wasserquelle angeschlossen ist,
**dadurch gekennzeichnet,**
**daß** am Bewässerungsschlauch (1) seitlich eine Schleife gebildet ist, in der auf dem Bewässerungsschlauch (1) ein Führungsglied (91) aufsitzt, das mittels eines Arms (9) mit einem Fahrgestell (5) verbunden ist.

3. Bewässerungseinrichtung nach Anspruch 2,
**dadurch gekennzeichnet,**
**daß** das Fahrgestell (5) mit mindestens zwei Laufrädern (51) versehen ist, von denen eines das Treibrad darstellt und mit einem Antrieb (7) verbunden ist.

4. Bewässerungseinrichtung nach Anspruch 2 oder 3,
**dadurch gekennzeichnet,**
**daß** eines der Laufräder (51) seitlich als Stütze des Arms (9) gelagert und auf dem Fahrgestell (5) schwenkbar drehgelagert ist.

5. Bewässerungseinrichtung nach Anspruch 3 oder 4,
**dadurch gekennzeichnet,**
**daß** der Antrieb (7) mit einem Handhabungs- und Steuerblock (71) versehen ist.

6. Bewässerungseinrichtung nach einem der Ansprüche 3 bis 5,
**dadurch gekennzeichnet,**
**daß** die Laufräder (51) des Fahrgestells (5) nacheinander angeordnet, auf ihrem Umfang mit einer Führungsnut (511) versehen und auf dem Bewässerungsschlauch (1) geführt sind.

7. Bewässerungseinrichtung nach einem der Ansprüche 2 bis 6,
**dadurch gekennzeichnet,**
**daß** das Fahrgestell (5) mit herunterklappbaren, vom Handhabungs- und Steuerblock (71) gesteuerten Stabilisierungsbeinen (10) versehen ist.

8. Bewässerungseinrichtung nach einem der Ansprüche 2 bis 7,
**dadurch gekennzeichnet,**
**daß** das Führungsglied (91) am mittleren Teil des Arms (9) befestigt ist und daß am freien Ende des Arms (9) ein Verlegeglied (92) befestigt ist, das auf dem Bewässerungsschlauch (1) gelagert und mit einem Aufnahmehaken (93) versehen ist.

9. Bewässerungseinrichtung nach einem der Ansprüche 2 bis 8,
**dadurch gekennzeichnet,**
**daß** das Verlegeglied (92) als Fahrgestell (5) mit nacheinander angeordneten Laufrädern (51) mit einer Umfangsnut (511) ausgebildet und in Bezug zu dem auf dem Bewässerungsschlauch (1) laufenden Fahrgestell (5) auf dem Bewässerungsschlauch (1) spiegelbildlich geführt ist.

10. Bewässerungseinrichtung nach AnsDruch 2,
**dadurch gekennzeichnet,**
**daß** der Bewässerungsschlauch (1) an seinem dem Anschluß an die Bewässerungsquelle (4) entgegenliegendem Ende oder an beiden Enden mit einem Aufnahmeglied (102) versehen ist.

11. Bewässerungseinrichtung nach Anspruch 2,
**dadurch gekennzeichnet,**
**daß** der Bewässerungsschlauch (1) an seinem an die Bewässerungsquelle (4) angeschlossenen Ende an einer Ziehvorrichtung (103) befestigt ist.

12. Bewässerungseinrichtung nach Anspruch 2,
**dadurch gekennzeichnet,**
**daß** sie zwei oder mehrere miteinander verbundene oder mehrbändige Bewässerungsschläuche (1) aufweist.

13. Bewässerungseinrichtung nach Anspruch 12,
**dadurch gekennzeichnet,**
**daß** einer der Bewässerungsschläuche (1) keine Öffnungen (101) aufweist.

## Claims

1. Method of stepwisely irrigating plots of land by means of an irrigation hose which is provided with openings along its entire length,
**characterised in that**
- a semicircular, upwardly extending loop is formed with the hose on the irrigation output side, the beginning and end of said loop being situated on the ground of the plot,
- a forward movement of the loop is effected in the longitudinal direction of the loop by acting on the hose, situated on the ground of the plot, in the longitudinal direction thereof, and hence a displacement of the hose is effected until the other end of the hose, and hence an end position of the loop, is reached,
- after the irrigation period which then occurs, the other end of this loop is displaced from the end position of the loop, through a pivotal angle of 180° relative to the displaced hose, to the ground of the plot,
- then, by acting on the hose, which lies on the ground of the plot, in the rearward longitudinal direction thereof, a rearward movement of the loop is effected in the longitudinal direction of the hose, and hence the hose is displaced further until the end of the hose at the output side is reached, and
- after an additional irrigation period, the method is continued in this manner until the irrigation of the plot is terminated.

2. Irrigation means for stepwise irrigation, the irrigation means comprising at least one flexible irrigation hose which is provided with openings for the emergence or outward spraying of water along its entire length and communicates with a source of water, **characterised in that** a loop is formed laterally on the irrigation hose (1), and a guide member (91), which is connected to a chassis (5) by means of an arm (9), rests on the irrigation hose (1) in said loop.

3. Irrigation means according to claim 2, **characterised in that** the chassis (5) is provided with at least two running wheels (51), one of which represents the driving wheel and is connected to a drive (7).

4. Irrigation means according to claim 2 or 3, **characterised in that** one of the running wheels (51) is mounted laterally as the support for the arm (9) and is rotatably mounted on the chassis (5).

5. Irrigation means according to claim 3 or 4, **characterised in that** the drive (7) is provided with an operating and control block (71).

6. Irrigation means according to one of claims 3 to 5, **characterised in that** the running wheels (51) of the chassis (5) are disposed one after the other, are provided with a guide groove (511) on their circumference and are guided on the irrigation hose (1).

7. Irrigation means according to one of claims 2 to 6, **characterised in that** the chassis (5) is provided with stabilising legs (10), which can be folded downwardly and are controlled by the operating and control block (71).

8. Irrigation means according to one of claims 2 to 7, **characterised in that** the guide member (91) is secured to the central part of the arm (9), and **in that** a displacement member (92) is secured to the free end of the arm (9), said displacement member being mounted on the irrigation hose (1) and being provided with a pick-up hook (93).

9. Irrigation means according to one of claims 2 to 8, **characterised in that** the displacement member (92) is in the form of a chassis (5) with running wheels (51) disposed one after the other and provided with a circumferential groove (511), and said displacement member is guided on the irrigation hose (1) in a mirror-inverted manner relative to the chassis (5) which runs on the irrigation hose (1).

10. Irrigation means according to claim 2, **characterised in that** the irrigation hose (1) is provided with a pick-up member (102) at its end situated opposite the connection with the irrigation source (4) or at both ends.

11. Irrigation means according to claim 2, **characterised in that** the irrigation hose (1) is secured to a drawing device (103) at its end communicating with the irrigation source (4).

12. Irrigation means according to claim 2, **characterised in that** it has two or more interconnected or multistrand irrigation hoses (1).

13. Irrigation means according to claim 12, **characterised in that** one of the irrigation hoses (1) has no openings (101).

## Revendications

1. Procédé pour arroser en continu des terrains au moyen d'un tuyau d'arrosage muni d'orifices sur toute sa longueur, **caractérisé en ce que**
- une boucle semi-circulaire verticale est formée avec le tuyau du côté de la sortie d'arrosage, le début et la fin de ladite boucle se trouvant sur le sol du terrain,
- on provoque, en agissant sur le tuyau situé sur le sol du terrain, dans son sens longitudinal, un mouvement en avant de la boucle dans le sens longitudinal du tuyau et, partant, un déplacement du tuyau, jusqu'à ce que l'autre extrémité du tuyau et, par-là même, une position finale de la boucle, soit atteinte,
- après la période d'arrosage en résultant, cette autre extrémité de tuyau est déplacée sur le sol du terrain, à partir de la position finale de la boucle, d'un angle de pivotement de 180° par rapport au tuyau déplacé,
- puis, en agissant sur le tuyau situé sur le sol du terrain, dans son sens longitudinal vers l'arrière, on provoque un mouvement en arrière de la boucle dans le sens longitudinal du tuyau et, partant, un déplacement du tuyau d'une autre distance jusqu'à ce que l'extrémité du tuyau côté sortie soit atteinte, et
- après une autre période d'arrosage, on continue de cette manière jusqu'à ce que l'arrosage du terrain soit terminé.

2. Dispositif d'arrosage pour l'arrosage en continu, le dispositif d'arrosage comprenant au moins un tuyau d'arrosage flexible qui est muni le long de toute sa longueur d'orifices pour la sortie ou la projection d'eau et est raccordé à une source d'eau, **caractérisé en ce que**, sur le tuyau d'arrosage (1), une boucle est formée latéralement, dans laquelle un élément de guidage (91) est posé sur le tuyau d'arrosage (1), ledit élément de guidage étant relié à un chariot (5) au moyen d'un bras (9).

3. Dispositif d'arrosage selon la revendication 2, **caractérisé en ce que** le chariot (5) est muni d'au moins deux roues (51), dont l'une représente la roue motrice et est reliée à un entraînement (7).

4. Dispositif d'arrosage selon la revendication 2 ou la revendication 3, **caractérisé en ce que** l'une des roues (51) est montée latéralement comme support du bras (9) et est montée de manière à pouvoir pivoter sur le chariot (5).

5. Dispositif d'arrosage selon la revendication 3 ou la revendication 4, **caractérisé en ce que** l'entraînement (7) est muni d'un bloc de manoeuvre et de commande (71).

6. Dispositif d'arrosage selon l'une quelconque des revendications 3 à 5, **caractérisé en ce que** les roues (51) du chariot (5) sont disposées l'une derrière l'autre, sont munies d'une gorge de guidage (511) sur leur pourtour et sont guidées sur le tuyau d'arrosage (1).

7. Dispositif d'arrosage selon l'une quelconque des revendications 2 à 6, **caractérisé en ce que** le chariot (5) est muni de pieds stabilisateurs (10) repliables vers le bas, commandés par le bloc de manoeuvre et de commande (71).

8. Dispositif d'arrosage selon l'une quelconque des revendications 2 à 7, **caractérisé en ce que** l'élément de guidage (91) est fixé sur la partie centrale du bras (9) et qu'un élément de déplacement (92) est fixé à l'extrémité libre du bras (9), ledit élément de déplacement étant monté sur le tuyau d'arrosage (1) et muni d'un crochet de réception (93).

9. Dispositif d'arrosage selon l'une quelconque des revendications 2 à 8, **caractérisé en ce que** l'élément de déplacement (92) est conçu comme un chariot (5) avec des roues disposées l'une derrière l'autre et munies d'une gorge circulaire (511), et est guidé sur le tuyau d'arrosage (1) de manière symétrique par rapport au chariot (5) circulant sur le tuyau d'arrosage (1).

10. Dispositif d'arrosage selon la revendication 2, **caractérisé en ce que** le tuyau d'arrosage (1) est muni, à son extrémité opposée au raccordement avec la source d'arrosage (4) ou à ses deux extrémités, d'un élément de réception (102).

11. Dispositif d'arrosage selon la revendication 2, **caractérisé en ce que** le tuyau d'arrosage (1) est fixé, à son extrémité raccordée avec la source d'arrosage (4), à un dispositif de traction (103).

12. Dispositif d'arrosage selon la revendication 2, **caractérisé en ce qu'**il présente deux ou plusieurs tuyaux d'arrosage (1) reliés entre eux ou à plusieurs bandes.

13. Dispositif d'arrosage selon la revendication 12, **caractérisé en ce que** l'un des tuyaux d'arrosage (1) ne présente pas d'orifices (101).
